# EUROPEAN PATENT SPECIFICATION

(11) **EP 3 241 117 B1**
(45) Date of publication and mention of the grant of the patent: **12.02.2020**
(21) Application number: 15825869.9
(22) Date of filing: 27.11.2015
(51) Int. Cl.: G06F 13/40

(54) **AN APPARATUS FOR USE IN A BANK TELLER SYSTEM**
VORRICHTUNG ZUR VERWENDUNG IN EINEM BANKSCHALTERSYSTEM
APPAREIL DESTINÉ À ÊTRE UTILISÉ DANS UN SYSTÈME DE GUICHET BANCAIRE

(30) Priority: 29.12.2014 MY PI2014003609; 03.06.2015 MY PI2015001449
(43) Date of publication of application: 08.11.2017
(73) Proprietor: Emerico International SDN BHD, Selangor, 46200 (MY)
(72) Inventor: LAI CHUNG ONN, 52100 Kuala Lumpur Wilayah Persekutuan (MY)
(74) Representative: Sharrock, Daniel John
(86) International application number: PCT/MY2015/000101
(87) International publication number: WO 2016/108683

(56) References cited:
- EP-A1- 2 770 710
- US-A1- 2012 262 379
- US-A1- 2014 195 711

## Description

### FIELD OF INVENTION

The invention relates to an electronic device. More particularly, the invention relates to an apparatus for facilitating interaction between two electronic devices.

### BACKGROUND OF THE INVENTION

Over the years, the use of tablet device in business world is growing due to its attractive portable and light weight elements. The touchscreen technology used in the tablet device also provides an effective way to share viewing of documents during meetings or when presenting a product. Nevertheless, tablet device is still not suitable for the use in bank teller system. This is due to no platform is capable of facilitating the interaction between two tablet devices efficiently such that they can interactively exchange information electronically via the tablet devices. In order to exchange information efficiently, certain types of input/output devices such as biometric device, card reader, keyboard, mouse and etc are needed, especially in a banking system. However, the tablet devices are not readily able to connect those devices.

There are a few patented technologies over the prior art relating to aforementioned system. Of interest in respect to an apparatus for intuitive user interaction between multiple devices and method thereof is US20140223490A1. This patent discloses a method and system for providing intuitive user interaction for sharing among multiple devices is provided, where a remote device without intuitive user interaction is connected to a local device configured with intuitive user interaction; a thumbnail control scheme in which display images of remote device screen are rendered in local device's screen and intuitive method to allow user to quickly interact with remote side application is provided; generic remote control scheme in which local device is acting as an external user interaction peripheral device of remote device is provided; and a region enhancement mode is provided by having areas pre-defined in the remote device, and having the pre-defined areas' respective layouts resized, reconfigured and mirrored in the local device, while the touch events that have occurred in the mapped areas in the local device are remapped and sent to an application that is rendered in the remote device.

Another patent US20130304815A1 discloses a method for transferring data from a first device to a second device is described, the method comprising: writing data into a data-sharing application of an operating system of the first device; requesting a data-sharing application to select a physical layer data transmission technology; the data-sharing application selecting a physical layer data transmission technology; connecting a data-sharing of an operating system of the second device via the selected physical layer data transmission technology; and transferring the data from the data-sharing application of the first device to the data-sharing application of the second device. The main drawback of these method and systems is that the input of the system solely relies on touchscreen. For a teller system, the tablet device must be readily capable of obtaining other types of input from one or more external device during the mirroring process.

Therefore, a platform which capable of facilitating interaction between two tablet devices and establishing connection between the tablet device and external device at the same time so as to achieve an efficient electronic platform for bank teller system is needed. The present invention provides such an apparatus and system thereof.

US 2014/0195711 relates to a baseboard management controller that includes a PCI express interface controller. A host computer is coupled to a remote computer via a network. The user of the remote computer manipulates a mouse and a keyboard to interact with the screen frame shown on a display screen. The user activity at the remote computer is communicated to the host computer. The host computer then implements the user activity as if it had occurred directly through the local mouse or local keyboard.

### SUMMARY OF INVENTION

The invention is set out in the appended set of claims.

The dependent claims set out particular embodiments.

The invention provides an apparatus for facilitating interaction between a first and a second electronic devices, characterised in that at least one of the electronic device is linked to at least one external electronic device via a connecting means for input and/or output data transmission between the electronic device and the external device, and each of the electronic devices is installed with an application module, in which the application module is configured to obtain input information from the first electronic device, transmit input information from the second electronic device to the first electronic device, transmit output information from the first electronic device to the external electronic device, obtain graphical output of the first electronic device, and transmit the graphical output to the second electronic device for display.

Preferably, the application module may comprise a computer-executable instruction for receiving inputs from either the first or second electronic devices, a computer-executable instruction for transmitting outputs from the first electronic device to the external electronic device, a computer-executable instruction for capturing the graphical image of the first electronic device at a predetermined time interval, a computer-executable instruction for transmitting the captured graphical image to the second electronic device, and a computer-executable instruction for displaying the captured graphical image on the display unit of the second electronic device.

Preferably, the first electronic device can be connected to the second electronic device wirelessly or wiredly via the connecting means.

Preferably, the electronic devices can be wiredly connected to the external device.

Preferably, the connecting means can be a connector comprises a circuit board, in which the circuit board includes a microcontroller incorporated with an electronic device communication module for establishing signal transmission between the electronic device and the circuit board, a biometric reading module for establishing signal transmission between the biometric information retrieval means and the circuit board, a card reading module for establishing signal transmission between the card reader and the circuit board, and an external reading module for establishing signal transmission between the external electronic device and the circuit board.

In one embodiment of the invention, the circuit board can be powered by an external power source through a charging circuit. Alternatively, the circuit board can be powered by an internal power source rechargeable through the external power source connector.

Preferably, the external electronic device can be a biometric reader, a card reader, a SIM card reader, a passport reader, a printer, a scanner, a cash or card collecting machine, a cash or card dispensing machine, a card embosser machine, a pin encryption device, a kiosk terminal, a cheque collector, a cheque scanner, a cheque printer, or in any combination thereof.

Preferably, the electronic device is a personal digital assistants (PDA), smart phones, tablets, laptops, netbooks, phablets, phoblets, iPad, or any suitable means which capable of processing data and performing data transmission and having a display unit.

At least one of the preceding objects is met, in whole or in part, by the present invention, in which the embodiment of the present invention describes a bank teller station that which incorporates the abovementioned apparatus so as to provide interaction between a client and a bank teller.

One skilled in the art will readily appreciate that the invention is well adapted to carry out the objects and obtain the ends and advantages mentioned, as well as those inherent therein. The embodiments described herein are not intended as limitations on the scope of the invention.

### BRIEF DESCRIPTION OF THE DRAWINGS

For the purpose of facilitating an understanding of the invention, there is illustrated in the accompanying drawing the preferred embodiments from an inspection of which when considered in connection with the following description, the invention, its construction and operation and many of its advantages would be readily understood and appreciated.
- Figure 1: is a schematic diagram illustrating an apparatus for facilitating interaction between first and second electronic devices which embodies therein the principle features of the invention.
- Figure 2: is a schematic block diagram illustrating the connections between the electronic device and the external electronic device.
- Figure 3: is schematic block diagram illustrating the microcontroller of the connector.

### DETAILED DESCRIPTION OF THE INVENTION

The invention will now be described in greater detail, by way of example, with reference to the drawings.

For the convenience of description, a recipient of goods or services in return for monetary or other valuable considerations shall be referred to as a "client" while an employee of a bank who deals directly with most clients shall be referred to as a "bank teller". The client may also represent an institution, corporation, or company.

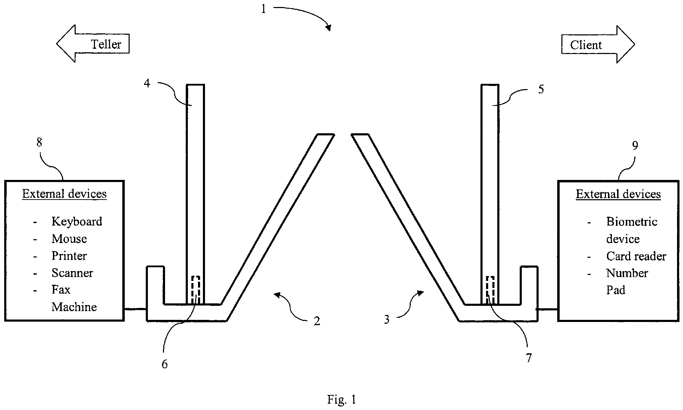

Referring to figure 1, the platform as illustrated therein comprises a pair of docking stations (2, 3), each having a connector tab (6, 7) for receiving an electronic device (4, 5), a connecting means for establishing a communication link between the electronic device (6, 7) and at least one external electronic device (8, 9). Preferably, the electronic device (4, 5) is a tablet device. It is known that a tablet device is provided with a transceiver, a processor, a touchscreen display, and multiple connection ports. Nonetheless, it should be noted that the tablet device can be replaced by any suitable device which carrying similar sort of hardware components such as personal digital assistants (PDA), smart phones, laptops, netbooks, phablets, and phoblets. Advantageously, the display of one (4) of the tablet device is facing toward to the bank teller, and the other one (5) is facing toward to the client. The tablet device which facing toward to the bank teller shall hereinafter be referred to as a first tablet device (4) and the other one shall be referred to as a second tablet device (5).

The first tablet device (4) is a main computing system for the tellers to carry out their tasks or works. Consequently, it is preferably connected to external electronic devices (8) such as keyboard, mouse, printer, scanner, fax machine, and any suitable electronic devices that provide the tellers a convenience workstation for performing their tasks. The external electronic device (8) can further be a third party system such as internet banking system, virtual banking system, virtual teller machine, mobile sales system, ATM machine, cash deposit machine, instant acquisition system, card dispenser, cheque collector, cheque printing device, instant card embosser, bill payment system, branch delivery system and etc. As for the second tablet device (5), it is a remote display unit that couples with biometric device, card reader, pin number pad, SIM card reader, and passport reader, and configured to gather information relating to a client, to verify information associated to the client, and to display graphical output of the first tablet device (4).

Preferably, the first (4) and second tablet devices (5) are wirelessly connected to a communication network such as telecommunication network, WIFI, Hotspot, Bluetooth, NFC, and etc so to establish a communication link for data transmission between the two devices. In another embodiment of the invention, the first (4) and second tablet devices (5) can also be wiredly connected via digital visual interface cable (DVI), high-definition multimedia interface (HDMI) cable, universal series bus (USB) and etc.

The tablet devices (4, 5) can install with an application module that is configured to obtain inputs from either the first (4) or second tablet devices (5), to transmit outputs from the first tablet device (4) to the external electronic device (8, 9), to capture the graphical image of the first tablet device (4) at a predetermined time interval, to transmit the captured graphical image to the second tablet device (5), to display the captured graphical image on the display unit of the second tablet device (5), to provide a graphical user interface, to generate a graphical overlay that can be displayed over the graphical output of the first tablet device (4) in the event of touch input from the second tablet device (5) is detected.

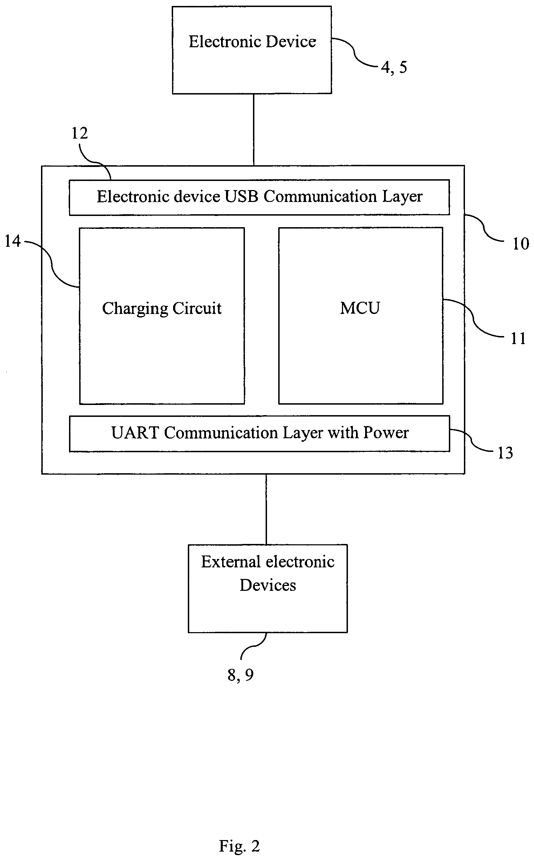

Referring to figure 2, each docking station (2, 3) includes a circuit board (10) embedded in its body, having a electronic device USB communication layer (12) permitting a tablet device (4, 5) to be connected to the circuit board (10), a microcontroller (11), at least one universal asynchronous receiver and/or transmitter (UART) communication layer (13) for connecting the external electronic devices (8, 9), and a charging circuit (14) for supplying electrical power. In the event if the electronic device (4, 5) is an iPad, due the natural of iPad USB connector being able to transmit electrical power, the iPad device itself can act as a secondary power supply source.

Preferably, the microcontroller (11) consists of a microchip which processes all communication messages. The microchip has 4 UARTs, the first 3 UARTs are directly linked to the communication layers and the fourth UART is linked to a multiplexer so that an additional 4 UARTs can be provided to the circuit board. The first 3 UARTs are configured to perform the function of transmit data, receive data, clear to send, and request to send, whereas the additional 4 UARTs are configured to only perform the function of transmit data and receive data. The UART communication layer is designed to allow multiple types of external electronic devices to be plugged in. The total number of external electronic device that can be connected to the circuit board is limited by the total number of UARTs of the microcontroller. However, the total number of UARTs can be increased by connecting an additional microcontroller.

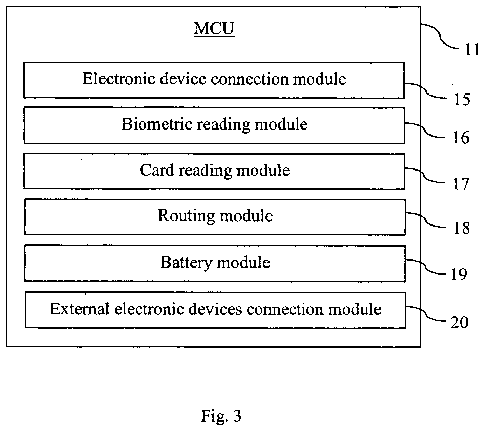

Referring to figure 3, the microcontroller (11) is provided with an electronic device connection module (15), a biometric reading module (16), a card reading module (17), a routing module (18), a battery module (19), and an external electronic device connection module (20). When a command is triggered by any one of the tablet devices (4, 5), the electronic device connection module (15) will response to parse the messages and perform either a microcontroller setup process, a routing process, a card reading process, or biometric reading process depending on the instructions of the command.

For example, if the instruction is to perform a card reading process or biometric reading process, the microcontroller (11) will activate the biometric device or the card reader. Once the biometric device or the card reader has retrieved the information, the retrieved information will be forwarded back to the second tablet device (5) through the circuit board (10). All the transmissions of data are governed by the routing protocol of the routing module (18).

The battery module (19) is configured to manage the power distribution of the power sources, preferably a battery which can be recharged through the power socket. It can also be used for monitoring the battery status and battery power level.

In one embodiment of the invention, the microcontroller (11) further includes the installer of the application module. Whenever a tablet device (4, 5) is connected to a docking station (2, 3), the microcontroller (11) will perform a checking on existence of the application module. If the application module does not exist or been detected, the microcontroller (11) will perform an application installation process on tablet device (4, 5).

Upon the activation of the application module, it initiates the process of capturing the graphical output of the first tablet device (4), and then transmits the graphical output to the second tablet device (5) for display. The inputs of the first tablet device (4) can be obtained from the connected external electronic devices (8) or directly from the touchscreen of the first tablet device (4). However, the operation of the external electronic devices (9) connected to the second tablet device (5) can only be activated when the first tablet device (4) transmit an activation instruction to the second tablet device (5) to prevent interruption from the inputs of the second tablet device (5). Nevertheless, a graphical overlay will still be generated and displayed on both display screens when touch inputs are detected.

The present disclosure includes as contained in the appended claims, as well as that of the foregoing description. Although this invention has been described in its preferred form with a degree of particularity, it is understood that the present disclosure of the preferred form has been made only by way of example and that numerous changes in the details of construction and the combination and arrangements of parts may be resorted to without departing from the scope of the invention.

## Claims

1. A system for facilitating interaction between a first (4) and second (5) electronic devices, comprising: a first electronic device (4) and a second electronic device (5); a first docking station (2) for accommodating the first electronic device (4) and a second docking station (3) for accommodating the second electronic device (5);
wherein each docking station (2, 3) includes a circuit board (10) embedded within its body, a connector tab (6, 7) for connecting the accommodated electronic device to the circuit board (10), and a plurality of input and/or output ports for connecting at least one external device (8, 9) to the circuit board (10);
wherein the circuit board (10) has a microcontroller (11) incorporated with:
a communication module (15) for establishing data transmission channel between the first and second electronic devices (4, 5),
a biometric module (16) for retrieving biometric information from a biometric device;
a card reading module (17) for retrieving digital information from a card shaped storage medium,
an external reading module (20) for retrieving input and/or output from the at least one external device (8, 9), and
an installer for performing an installation process of an application module on the connected electronic device (4, 5) when the connected electronic device is not installed with the application module;
wherein the application module installed on each electronic device (4, 5) is configured to:
obtain graphical output of the first electronic device (4) and transmit the graphical output to the second electronic device (5) for display on the second electronic device (5), and transmit the biometric information, digital information from the card shaped storage medium, and/or inputs of the external device (8, 9) from the second electronic device (5) to the first electronic device (4) for processing;
and wherein the operation of the external electronic devices (9) connected to the second electronic device (5) can only be activated when the first electronic device (4) transmits an activation instruction to the second tablet device (5) to prevent interruption from the inputs of the second electronic device (5).

2. A system according to claim 1, wherein the application module comprises:
a computer-executable instruction for receiving inputs from either the first (4) or second (5) electronic devices;
a computer-executable instruction for transmitting outputs from the first electronic device (4) to the external electronic device (8, 9);
a computer-executable instruction for capturing the graphical image of the first electronic device (4) at a predetermined time interval;
a computer-executable instruction for transmitting the captured graphical image to the second electronic device (5); and
a computer-executable instruction for displaying the captured graphical image on the display unit of the second electronic device (5).

3. A system according to claim 1 or claim 2, wherein the first electronic device (4) is connected to the second electronic device (5) wirelessly.

4. A system according to any one of claims 1 to 3, wherein the electronic devices (4, 5) are wiredly connected via the connecting means.

5. A system according to any one of claims 1 to 4, wherein the electronic devices (4, 5) are wiredly connected to the external devices (8, 9).

6. A system according to any one of claims 1 to 5, wherein the circuit board (10) is powered by an external power source through a charging circuit (14).

7. A system according to any one of claims 1 to 5, wherein the circuit board (10) is powered by an internal power source rechargeable through the external power source connector.

8. A system according to any one of claims 1 to 7, wherein the external electronic device (8, 9) is a SIM card reader, a passport reader, a printer, a scanner, a cash or card collecting machine, a cash or card dispensing machine, a card embosser machine, a pin encryption device, a kiosk terminal, a cheque collector, a cheque scanner, a cheque printer, or any combination thereof.

9. A system according to any one of claims 1 to 8, wherein the electronic device (4, 5) is one of personal digital assistants (PDA), smart phones, tablets, laptops, netbooks, phablets, phoblets, iPad, or any suitable means which capable of processing data and performing data transmission and having a display unit.

10. A bank teller station incorporating a system as claimed in any one of claims 1 to 9, so as to provide interaction between a client and a bank teller.

## Patentansprüche

1. System zum Erleichtern der Interaktion zwischen einer ersten (4) und einer zweiten (5) elektronischen Vorrichtung, das aufweist:
eine erste elektronische Vorrichtung (4) und eine zweite elektronische Vorrichtung (5);
eine erste Dockingstation (2) zum Aufnehmen der ersten elektronischen Vorrichtung (4) und eine zweite Dockingstation (3) zum Aufnehmen der zweiten elektronischen Vorrichtung (5);
wobei jede Dockingstation (2, 3) eine darin eingebettete Platine (10), ein Verbinderelement (6, 7) zum Verbinden der aufgenommenen elektronischen Vorrichtung mit der Platine (10) und eine Mehrzahl von Eingangs- und/oder Ausgangsports zum Verbinden mindestens einer externen Vorrichtung (8, 9) mit der Platine (10) beinhaltet;
wobei die Platine (10) einen Mikrocontroller (11) aufweist, der ausgeführt ist mit:
einem Kommunikationsmodul (15) zum Aufbauen eines Datenübertragungskanals zwischen der ersten und zweiten elektronischen Vorrichtung (4, 5),
einem biometrischen Modul (16) zum Abrufen biometrischer Informationen von einer biometrischen Vorrichtung;
einem Kartenlesemodul (17) zum Abrufen digitaler Informationen von einem kartenförmigen Speichermedium, einem externen Lesemodul (20) zum Abrufen von Eingaben und/oder Ausgaben von der mindestens einen externen Vorrichtung (8, 9) und
einer Installationseinrichtung zum Durchführen eines Installationsprozesses eines Anwendungsmoduls auf der verbundenen elektronischen Vorrichtung (4, 5), wenn auf der verbundenen elektronischen Vorrichtung das Anwendungsmodul nicht installiert ist;
wobei das Anwendungsmodul, das auf jeder elektronischen Vorrichtung (4, 5) installiert ist, dafür konfiguriert ist:
eine grafische Ausgabe der ersten elektronischen Vorrichtung (4) zu erlangen und die grafische Ausgabe an die zweite elektronische Vorrichtung(5) zur Anzeige auf der zweiten elektronischen Vorrichtung (5) zu übertragen und die biometrischen Informationen, digitale Informationen von dem kartenförmigen Speichermedium und/oder Eingaben der externen Vorrichtung (8, 9) von der zweiten elektronischen Vorrichtung (5) zum Verarbeiten an die erste elektronische Vorrichtung (4) zu übertragen;
und wobei der Betrieb der externen elektronischen Vorrichtungen (9), die mit der zweiten elektronischen Vorrichtung (5) verbunden sind, nur aktiviert werden kann, wenn die erste elektronische Vorrichtung (4) eine Aktivierungsanweisung an die zweite Tablet-Vorrichtung (5) überträgt, um eine Unterbrechung durch die Eingaben der zweiten elektronischen Vorrichtung (5) zu vermeiden.

2. System nach Anspruch 1, wobei das Anwendungsmodul aufweist:
eine computerausführbare Anweisung zum Empfangen von Eingaben von entweder der ersten (4) oder zweiten (5) elektronischen Vorrichtung;
eine computerausführbare Anweisung zum Übertragen von Ausgaben von der ersten elektronischen Vorrichtung (4) an die externe elektronische Vorrichtung (8, 9);
eine computerausführbare Anweisung zum Erfassen des grafischen Bildes der ersten elektronischen Vorrichtung (4) in einem vorbestimmten Zeitintervall;
eine computerausführbare Anweisung zum Übertragen des erfassten grafischen Bildes an die zweite elektronische Vorrichtung (5); und
eine computerausführbare Anweisung zum Anzeigen des erfassten grafischen Bildes auf der Anzeigeeinheit der zweiten elektronischen Vorrichtung (5).

3. System nach Anspruch 1 oder Anspruch 2, wobei die erste elektronische Vorrichtung (4) drahtlos mit der zweiten elektronischen Vorrichtung (5) verbunden ist.

4. System nach einem der Ansprüche 1 bis 3, wobei die elektronischen Vorrichtungen (4, 5) über die Verbindungseinrichtung drahtgebunden verbunden sind.

5. System nach einem der Ansprüche 1 bis 4, wobei die elektronischen Vorrichtungen (4, 5) mit den externen Vorrichtungen (8, 9) drahtgebunden verbunden sind.

6. System nach einem der Ansprüche 1 bis 5, wobei die Platine (10) von einer externen Energiequelle über eine Ladeschaltung (14) mit Energie versorgt wird.

7. System nach einem der Ansprüche 1 bis 5, wobei die Platine (10) von einer internen Energiequelle mit Energie versorgt wird, die über den Verbinder der externen Energiequelle wiederaufladbar ist.

8. System nach einem der Ansprüche 1 bis 7, wobei die externe elektronische Vorrichtung (8, 9) ein SIM-Kartenleser, ein Passleser, ein Drucker, ein Scanner, eine Bargeld- oder Kartenannahmevorrichtung, eine Bargeld- oder Kartenausgabevorrichtung, eine Kartenprägevorrichtung, eine Pin-Verschlüsselungsvorrichtung, ein Kioskendgerät, ein Schecksammler, ein Scheckscanner, ein Scheckdrucker oder eine beliebige Kombination davon ist.

9. System nach einem der Ansprüche 1 bis 8, wobei die elektronische Vorrichtung (4, 5) eines ist von Personal Digital Assistants (PDA), Smartphones, Tablets, Laptops, Netbooks, Phablets, Phoblets, iPad oder eine geeignete Einrichtung, die es vermag, Daten zu verarbeiten und eine Datenübertragung durchzuführen, und eine Anzeigeeinheit aufweist.

10. Bankschalterstation, die ein System nach einem der Ansprüche 1 bis 9 einbindet, um eine Interaktion zwischen einem Kunden und einem Bankmitarbeiter bereitzustellen.

## Revendications

1. Système permettant de faciliter une interaction entre un premier (4) et un deuxième (5) dispositif électronique, comprenant :
un premier dispositif électronique (4) et un deuxième dispositif électronique (5) ;
une première station d'accueil (2) pour accueillir le premier dispositif électronique (4) et une deuxième station d'accueil (3) pour accueillir le deuxième dispositif électronique (5) ;
chaque station d'accueil (2, 3) comprenant un circuit imprimé (10) intégré à l'intérieur de son corps, une patte de connexion (6, 7) pour connecter le dispositif électronique accueilli au circuit imprimé (10), et une pluralité de ports d'entrée et/ou de sortie pour connecter au moins un dispositif externe (8, 9) au circuit imprimé (10) ;
le circuit imprimé (10) présentant un microcontrôleur (11) intégré avec :
un module de communication (15) pour établir un canal de transmission de données entre les premier et deuxième dispositifs électroniques (4, 5),
un module biométrique (16) pour récupérer des informations biométriques à partir d'un dispositif biométrique ;
un module de lecture de carte (17) pour récupérer des informations numériques à partir d'un support de stockage en forme de carte,
un module de lecture externe (20) pour récupérer une entrée et/ou une sortie à partir dudit au moins un dispositif externe (8, 9), et
un dispositif d'installation pour effectuer un processus d'installation d'un module d'application sur le dispositif électronique connecté (4, 5) lorsque le module d'application n'est pas installé sur le dispositif électronique connecté ;
le module d'application installé sur chaque dispositif électronique (4, 5) étant configuré pour :
obtenir une sortie graphique du premier dispositif électronique (4) et transmettre la sortie graphique au deuxième dispositif électronique (5) pour un affichage sur le deuxième dispositif électronique (5) et pour transmettre les informations biométriques, les informations numériques provenant du support de stockage en forme de carte et/ou des entrées du dispositif externe (8, 9) provenant du deuxième dispositif électronique (5) au premier dispositif électronique (4) en vue d'un traitement ;
et dans lequel le fonctionnement des dispositifs électroniques externes (9) connectés au deuxième dispositif électronique (5) peut seulement être activé lorsque le premier dispositif électronique (4) transmet une instruction d'activation au deuxième dispositif de tablette (5) pour empêcher une interruption par les entrées du deuxième dispositif électronique (5).

2. Système selon la revendication 1, dans lequel le module d'application comprend :
une instruction exécutable par ordinateur pour recevoir des entrées du premier (4) ou du deuxième (5) dispositif électronique ;
une instruction exécutable par ordinateur pour transmettre des sorties du premier dispositif électronique (4) au dispositif électronique externe (8, 9) ;
une instruction exécutable par ordinateur pour capturer l'image graphique du premier dispositif électronique (4) à un intervalle de temps prédéterminé ;
une instruction exécutable par ordinateur pour transmettre l'image graphique capturée au deuxième dispositif électronique (5) ; et
une instruction exécutable par ordinateur pour afficher l'image graphique capturée sur l'unité d'affichage du deuxième dispositif électronique (5).

3. Système selon la revendication 1 ou 2, dans lequel le premier dispositif électronique (4) est connecté au deuxième dispositif électronique (5) sans fil.

4. Système selon l'une quelconque des revendications 1 à 3, dans lequel les dispositifs électroniques (4, 5) sont connectés par câble par l'intermédiaire des moyens de connexion.

5. Système selon l'une quelconque des revendications 1 à 4, dans lequel les dispositifs électroniques (4, 5) sont connectés par câble aux dispositifs externes (8, 9) .

6. Système selon l'une quelconque des revendications 1 à 5, dans lequel le circuit imprimé (10) est alimenté par une source d'énergie externe par le biais d'un circuit de chargement (14).

7. Système selon l'une quelconque des revendications 1 à 5, dans lequel le circuit imprimé (10) est alimenté par une source d'énergie interne rechargeable par le biais d'un connecteur de source d'énergie externe.

8. Système selon l'une quelconque des revendications 1 à 7, dans lequel le dispositif électronique externe (8, 9) est un lecteur de carte SIM, un lecteur de passeport, une imprimante, un scanner, une machine d'encaissement par espèces ou par carte, une machine de distribution d'espèces ou de carte, une machine d'estampage de carte, un dispositif de cryptage de PIN, un terminal de kiosque, un collecteur de chèques, un scanner de chèques, une imprimante de chèques ou n'importe quelle combinaison des ces éléments.

9. Système selon l'une quelconque des revendications 1 à 8, dans lequel le dispositif électronique (4, 5) est l'un parmi des assistants numériques personnels (PDA), des smartphones, des tablettes, des ordinateurs portables, des netbooks, des phablettes, des phoblets des iPad ou tout moyen approprié capable de traiter des données et d'effectuer une transmission de données et présentant une unité d'affichage.

10. Station de guichet de banque intégrant un système selon l'une quelconque des revendications 1 à 9, de façon à assurer une interaction entre un client et un caissier de banque.
